(19) Europäisches Patentamt
European Patent Office
Office européen des brevets

(11) Veröffentlichungsnummer: **0 176 709**
**B1**

(12) **EUROPÄISCHE PATENTSCHRIFT**

(45) Veröffentlichungstag der Patentschrift: **09.12.87**

(21) Anmeldenummer: **85109995.2**

(22) Anmeldetag: **08.08.85**

(51) Int. Cl.⁴: **C 08 G 12/34**, C 08 G 12/42, C 08 J 5/04 // B32B17/04, C08J5/08

(54) **Verfahren zur Herstellung von lagerstabilen, wässrigen Melamin-Formaldehydharz-Lösungen.**

(30) Priorität: **17.08.84 DE 3430248**

(43) Veröffentlichungstag der Anmeldung:
***09.04.86 Patentblatt 86/15***

(45) Bekanntmachung des Hinweises auf die Patenterteilung:
**09.12.87 Patentblatt 87/50**

(84) Benannte Vertragsstaaten:
**DE FR GB SE**

(56) Entgegenhaltungen:
**EP - A - 0 077 067**
**DE - A - 2 144 534**
**DE - A - 2 254 450**
**DE - B - 1 158 705**
**DE - B - 2 149 970**
**GB - A - 919 808**
**US - A - 3 479 247**

(73) Patentinhaber: **BASF Aktiengesellschaft, Carl-Bosch-Strasse 38, D-6700 Ludwigshafen (DE)**

(72) Erfinder: **Goeckel, Ulrich, Dr., Leipziger Strasse 6, D-6737 Boehl-Iggelheim (DE)**
Erfinder: **Neubach, Werner, Lindenberger Strasse 9, D-6700 Ludwigshafen (DE)**
Erfinder: **Etling, Hans, Dr., Pommernstrasse 12, D-6701 Dannstadt-Schauernheim (DE)**

**EP 0 176 709 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Als Überzugs-, Imprägnier- und Bindemittel werden für viele Anwendungszwecke Aminoplast-Harz-Lösungen, ggf. zusammen mit Polymer-Dispersionen, meist in wässeriger Lösung eingesetzt. Ausser den häufig verwendeten Harnstoff-Formaldehyd-Kondensaten werden zunehmend auch Melamin-Formaldehyd-Kondensate verwendet, da sie den damit behandelten Substraten bessere Temperaturbeständigkeit und in manchen Fällen eine verringerte Entflammbarkeit verleihen. Für eine Reihe von Anwendungen, z.B. die Verfestigung von Faservliesen, werden die Aminoplastharze in stark verdünnter wässeriger Lösung oder Dispersion appliziert, so dass an ihre Wasserverdünnbarkeit grosse Ansprüche gestellt werden. Auch müssen beim praktischen Einsatz die wässerigen Lösungen der Aminoplastharze sehr lagerstabil sein.

Zwar weisen einzelne handelsübliche Produkte die eine oder andere Anforderung, z.B. hohe Wasserverdünnbarkeit oder gute Lagerstabilität auf, doch ist bei den Produkten des Standes der Technik die Kombination aller Anforderungen, nämlich hohe Lagerstabilität, hohe Wasserverdünnbarkeit, Flammfestigkeit, verhältnismässig hohe Konzentration der Ausgangslösungen sowie hohe Reissfestigkeit der verfestigten Vliese nicht ausreichend gegeben. So werden beispielsweise Lagerstabilität und gute Wasserverdünnbarkeit bei veretherten Melamin-Formaldehyd-Harzen erreicht, doch sind damit verfestigte Faservliese verhältnismässig leicht entflammbar. Gut wasserverdünnbare unveretherte Melamin-Formaldehyd-Kondensate können zwar durch Sprühtrocknung zu lagerstabilen Harzpulvern verarbeitet werden, doch ist die Wiederauflösung der Pulver zeitraubend und störanfällig, z.B. wegen Klumpenbildung und Trübungen.

Zur Einstellung einer guten Lagerstabilität bei wässerigen Melamin-Formaldehyd-Harz-Lösungen sind schon verschiedene Massnahmen vorgeschlagen worden: So wird bei dem Verfahren der DE 1 595 368 bei der Herstellung der Harze ε-Caprolactam, bei dem Verfahren der DE-AS 1210174 p-Toluolsulfonamid und Rohzucker, bei dem Verfahren der DE-OS 21 55 104 Bis-(β-cyanethyl)amin, bei dem Verfahren der DE-AS 1210173 Rohzucker und ggf. Thioharnstoff, bei dem Verfahren der DE-B-1 158 705 Alkanole und Amidosulfonsäuresalze, bei dem Verfahren der DE-OS 30 48 448 Harnstoff und bei dem Verfahren der DE-AS 21 44 534 Lactame und Zucker einkondensiert. Allen diesen Verfahren ist jedoch gemeinsam, dass dabei verhältnismässig hohe Kondensationsgrade eingestellt werden müssen, die Wasserverdünnbarkeitspunkten von mindestens 15% entsprechen. Melamin-Formaldehyd-Harz-Lösungen derartig hoher Wasserverdünnbarkeitspunkte sind jedoch nicht als Bindemittel für Faservliese, insbesondere nicht für Faservliese aus mineralischen Fasern, wie Glas, geeignet, da bei der Verdünnung auf praxisüblicher Konzentrationen klebrige Harzbestandteile ausflocken. Senkt man jedoch bei diesen bekannten Verfahren den Kondensationsgrad, um eine bessere Wasserverdünnbarkeit zu erreichen, so sinkt dabei die Lagerstabilität der wässerigen Lösungen stark ab.

Durch eine Erhöhung des Elektrolytanteils im Polykondensat durch wasserlöslichkeitsvermittelnde anionische Gruppen kann zwar die Wasserverdünnbarkeit der Melamin-Formaldehyd-Harze verbessert werden, doch werden dann beim Einsatz der Produkte zum Verfestigen von Faservliesen Vliese erhalten, die eine unerwünscht hohe Wasserempfindlichkeit aufweisen, die ihre praktische Verwendung stark einschränkt. Eine hinreichende Lagerstabilität und Wasserverdünnbarkeit weisen zwar auch nichtmodifizierte Melamin-Formaldehyd-Harze auf, bei deren Herstellung Melamin: Formaldehyd im molaren Verhältnis von 1:1,5 bis 2 kondensiert wurde und die einen sehr niedrigen Feststoffgehalt von nur 30% haben, doch treten bei derartigen Produkten hohe Fracht- und Lagerkosten auf, und die mechanischen Eigenschaften damit verfestigter mineralischer Faservliese lassen zu wünschen übrig. Die nach dem Verfahren der DE-B-1 444 006 durch Polykondensation von Melamin mit mehr als 3 Mol Formaldehyd je Mol Melamin unter Zusatz von Dicyandiamid, Guanidin und niederen Alkoholen, wie Methanol, hergestellten wasserlöslichen, höhermolekularen, härtbaren Harze sind zwar ausreichend mit Wasser verdünnbar, spalten aber bei ihrer Anwendung grosse Mengen Formaldehyd ab. Sie sind daher stark umweltbelastend und erfordern bei ihrem Einsatz einen grossen Aufwand für die Beseitigung des abgegebenen Formaldehyds.

Schliesslich ist es aus der DE-OS 31 40 715 bekannt, wässerige Tränkharzlösungen eines Feststoffgehalts von mehr als 60% herzustellen, wobei das Molverhältnis von Melamin: Formaldehyd 1:1,5 bis 1,8 beträgt, die eine Wasserverdünnbarkeit bei 20° von mindestens 1:2 aufweisen. Bei ihrer Herstellung können übliche Modifizierungsmittel mitverwendet werden, z.B. Caprolactam und Diethylenglycol. Ausser mehrwertigen Alkoholen, die das Auskristallisieren von Methylolmelaminen aus den wässerigen Lösungen verhindern sollen, können noch weitere Modifizierungsmittel, z.B. Salze der Amidosulfonsäure, eingesetzt werden und bis zu 25% des Melamins durch andere Aminoplastbildner, wie Guanidin, Cyanamid, Dicyandiamid, Acetoguanamin, Formoguanamin und Harnstoff ersetzt werden. Die dabei erhaltenen Melamin-Formaldehyd-Harze, die zur Tränkung von Dekorpapieren eingesetzt werden sollen, weisen jedoch einen verhältnismässig niedrigen Kondensationsgrad und unzureichende Wasserverdünnbarkeit auf.

Es wurde nun gefunden, dass man lagerstabile, wässerige Lösungen von Melamin-Formaldehyd-Harzen eines Harzgehaltes von 50 bis 65 Gew.% durch Polykondensation von Formaldehyd und Melamin in wässerigem Medium vorteilhaft herstellen kann, wenn man unter folgenden für sich in Unterkombinationen bekannten Bedingungen bei 70 bis 100° C und einem pH-Wert über 8 bei einem molaren Verhältnis von Melamin:Formaldehyd

von 1 bis 2,0 bis 3,2 unter Zusatz von

a) 0,025 bis 0,045 Mol je Mol Formaldehyd eines Salzes der Amidosulfonsäure,
b) zusammen 10 bis 30 Gew.%, bezogen auf Melamin,
   b1) wenigstens 4 Gew.%, bezogen auf Melamin, einer gesättigten aliphatischen Verbindung mit 1 bis 9 C-Atomen und 1 bis 2 Strukturelementen der allgemeinen Formel

$$-\overset{\overset{X}{\|}}{C}-NH-$$

   in der X für O, NH oder S steht,
   b2) wenigstens 3 Gew.%, bezogen auf Melamin, eines nicht-reduzierenden Zuckers und
   b3) wenigstens 3 Gew.%, bezogen auf die Menge an Melamin, eines 1 bis 3 C-Atome enthaltenden Alkanols,

bis zu einem Kondensationsgrad polykondensiert, der einem Wasserverdünnbarkeitspunkt der Harzlösung von nicht über 10% entspricht. Bei dem neuen Verfahren erhält man Melamin-Formaldehyd-Harz-Lösungen, die auch bei einem Festharzgehalt von etwa 60% niedrige Viskosität aufweisen und sehr gut wasserverdünnbar und ausgezeichnet lagerstabil sind. Beispielsweise ändert sich der Wasserverdünnbarkeitspunkt einer nach dem Verfahren hergestellten 55%igen wässerigen Lösung bei einer Lagerung von 10 Wochen von etwa 7,5 nur auf etwa 8,5%, wobei sich die Viskosität praktisch nicht verändert und keine Trübung auftritt. Die nach dem neuen Verfahren hergestellten wässerigen Melamin-Formaldehyd-Harz-Lösungen können auch mit Wasser eines hohen Härtegrades verdünnt werden, wobei bei einer Verdünnung auf eine Konzentration von 15% erst nach 72 Stunden eine Trübung eintritt und bei der Verdünnung einer 8 Wochen gelagerten Harzlösung auf 15% mit hartem Wasser eine Trübung erst nach mehr als 48 Stunden erfolgt. Dies ist ein wesentlicher Vorteil, da die verdünnten Harz-Lösungen auch bei Betriebsunterbrechungen über längere Zeit nicht unbrauchbar werden. Die erfindungsgemäss hergestellten wässerigen Melamin-Formaldehyd-Harz-Lösungen sind insbesondere als Überzugs-, Imprägnier- und Bindemittel für Faservliese geeignet. Die Faservliese können aus natürlichen oder synthetischen organischen Fasern, z.B. aus Polyamiden, Polyethylenglykolterephthalat, Polypropylen, Cellulose und/oder Viskose sowie insbesondere mineralischen Fasern, z.B. Gesteinswolle oder vorzugsweise Glasfasern, bestehen, wobei die Fasern die übliche Länge und Stärke aufweisen. Faservliese, insbesondere aus Glasfasern, die mit den erfindungsgemäss hergestellten Melamin-Formaldehyd-Harz-Lösungen in an sich üblicher Weise verfestigt sind, weisen eine bis zu 50% höhere Reissfestigkeit in trockenem und nassem Zustand auf, als solche, die mit herkömmlichen Melamin-Formaldehyd-Harz-Lösungen verfestigt sind. Ausserdem weisen die verfestigten Vliese den Vorteil der Schwerentflammbarkeit und gute Temperaturbeständigkeit auf, so dass sie für einen breiten Anwendungsbereich mit hohen Ansprüchen eingesetzt werden können. Bei der Verfestigung der Vliese werden die nach den erfindungsgemässen Verfahren hergestellten Harzlösungen im allgemeinen in einer Konzentration von 10 bis 25 Gew.% eingesetzt und durch Imprägnieren der Vliese appliziert, wobei die Vliese z.B. durch ein Bad der Tränkharze geführt und dann in an sich üblicher Weise abgequetscht oder auch mit den Harzlösungen besprüht sowie mit geschäumten Harzlösungen behandelt werden können. Die imprägnierten Vliese werden dann nach dem Trocknen bei Temperaturen von 200 bis 280° C in an sich üblicher Weise getempert, wobei die Harze aushärten.

In manchen Fällen ist es von Vorteil, den Harzlösungen übliche wässerige Polymer-Dispersion, z.B. auf Basis von Polyvinylacetat oder Polyacrylsäureestern oder Polymethacrylsäureestern zuzusetzen, die gegebenenfalls monoolefinisch ungesättigte Carbonsäure, wie besonders Acrylsäure, und gegebenenfalls deren gegebenenfalls an den Stickstoffatomen durch Methylol-Gruppen oder deren Alkylether substituierte Amide, wie N-Methylolacrylamid und -methacrylamid und N-Methoxymethylmethacrylamid einpolymerisiert enthalten können. Ausserdem können zusätzlich Schutzkolloide, wie Polyvinylalkohol und/oder native Bindemittel, wie Stärke sowie ferner übliche oberflächenaktive Stoffe und gegebenenfalls Haftvermittler sowie Katalysatoren für die Härtung, z.B. Salze des Ammoniaks oder von Aminen mit Mineralsäuren, mitverwendet werden. Geeignete Polyacrylat-Dispersionen leiten sich vorzugsweise von 2 bis 8, insbesondere 2 bis 4, insbesondere 2 bis 4 C-Atome im Alkoholrest enthaltenden Acrylestern, wie besonders Ethylacrylat, n-Butylacrylat und iso-Butylacrylat und 0,5 bis 5 Gew.%, bezogen auf das Polymerisat, (Meth)-acrylsäure, N-Methylolmethacrylamid und geringen Acryl- oder Methacrylamid ab.

Die Herstellung der Melamin-Formaldehyd-Harz-Lösungen erfolgt in an sich bekannter Weise durch Polykondensation von Formaldehyd und Melamin in wässeriger Lösung bei Temperaturen von 70 bis 100° C und einem pH-Wert über 8, vorzugsweise zwischen 8,5 und 9,5. Der pH-Wert kann z.B. mit Alkalihydroxiden oder tert. Aminen, vorzugsweise mit Dialkylalkanolaminen wie Dimethylethanolamin, Diethylethanolamin, Dimethylpropanolamin oder Dimethylbutanolamin eingestellt werden. Formaldehyd wird im allgemeinen als wässerige handelsübliche Lösung einer Konzentration von meist 30 bis 40 Gew.% eingesetzt. Auch feste Oligomere, wie Paraformaldehyd, können verwendet werden. Melamin kann im allgemeinen in eine vorgelegte wässerige Lösung des Formaldehyds eingetragen werden. Das molare Verhältnis von Melamin zu Formaldehyd beträgt vorzugsweise 1:2,4 bis 2,8. Als Salz der Amidosulfonsäure werden meist Alkalisalze, vorzugsweise das Natriumsalz, eingesetzt und bei Beginn oder während der Polykondensationsreaktion in fester oder wässerig-gelöster Form in das Reaktionsgemisch eingetragen. Die weiteren Zusatzstoffe

(b1), (b2) und (b3) werden im allgemeinen dem Reaktionsansatz bei oder vor der Polykondensationsreaktion zugegeben. Als gesättigte aliphatische Verbindung (b1) mit 1 bis 9, vorzugsweise 1 bis 7 C-Atomen und 1 bis 2 Strukturelementen der allgemeinen Formel sind z.B. Lactame, wie Pyrrolidon, Önanthlactam und Capryllactam sowie besonders ε-Caprolactam, Harnstoff, N-Methylharnstoff, Thioharnstoff, Cyanamid, Dicyandiamid, Ethyl-, Propyl- und n-Butylcarbamat und Methylglykolcarbamat sowie ferner Acetamid, Propionsäureamid, Glutarsäureamid, Ethylthiocarbamat, Semicarbazid, Thiosemicarbazid und Guanidin geeignet. Von besonderem Interesse sind ε-Caprolactam und/oder Acetoguanamin. Als nicht reduzierender Zucker (b2) kommt vor allem Saccharose sowie ferner Sorbit und Mannit in Frage. Als Komponente (b3) sind vor allem Methanol sowie ferner Ethanol, n-Propanol und iso-Propanol geeignet. Die Menge der Komponenten (b1) und (b2) beträgt von 10 bis 25 Gew.% bezogen auf Melamin. Der Anteil an ε-Caprolactam und/oder Acetoguanamin liegt vorzugsweise zwischen 7 und 18 Gew.%, bezogen auf die Menge an Melamin, der Anteil an Saccharose vorzugsweise zwischen 5 und 15 Gew.%, bezogen auf Melamin und der Anteil an Methanol vorzugsweise zwischen 3 und 6 Gew.%, bezogen auf die Menge an Melamin.

Das Molverhältnis von Melamin zu Formaldehyd bei dem erfindungsgemässen Verfahren ist wesentlich für die guten anwendungstechnischen Eigenschaften der Harze und ihre hervorragende Lagerstabilität. Eine Erhöhung des Formaldehyd-Anteils führt zu einer Verschlechterung der Lagerstabilität, einer Verminderung zu abnehmenden Reissfestigkeiten der mit den Harzen verfestigten Vliese. Bei dem erfindungsgemässen Verfahren kondensiert man so lange, bis der Kondensationsgrad einem Wasserverdünnbarkeitspunkt der Harzlösung (Reaktionslösung) von nicht über 10% entspricht. Dabei ist der Wasserverdünnbarkeitspunkt PV als diejenige Konzentration Y% (Gramm je Gramm) an Harzfeststoff definiert, auf die die Harzlösung mit Wasser bei Raumtemperatur (20° C) verdünnt werden kann, bis gerade Trübung eintritt. (Unter Wasserverdünnbarkeit A der Harzlösung versteht man die Anzahl Volumenteile Wasser, die Volumenteil der Harzlösung bei Raumtemperatur gerade noch ohne Trübung aufnimmt.) Der Kondensationsgrad ist wesentlich für die hervorragenden anwendungstechnischen Eigenschaften der nach dem erfindungsgemässen Verfahren hergestellen Melamin-Formaldehyd-Harz-Lösungen. Besonders bevorzugt ist ein Kondensationsgrad, der einem Wasserverdünnbarkeitspunkt von 5 bis 10% entspricht. Die nach dem erfindungsgemässen Verfahren hergestellten Melamin-Formaldehyd-Harz-Lösungen sind gut verträglich mit schwach kationischen, neutralen und anionischen, wasserlöslichen oder -dispergierbaren Amino- und/oder Phenoplastkondensaten, insbesondere mit Harnstoff-Formaldehyd-Kondensaten oder anderen Melamin-Formaldehyd-Harzen. Die nach dem erfindungsgemässen Verfahren erhaltenen Harz-Lösungen ergeben verfestigte Glasfaservliese mit Reissfestigkeiten, die mit Melamin-Formaldehyd-Harzen des Standes der Technik nicht erreicht werden und die das Festigkeitsniveau der mit Harnstoff-Formaldehyd-Harzen verfestigten Glasfaservliese erreichen, wobei jedoch die erfindungsgemäss verfestigten Vliese weniger wasserempfindlich sind. Ein besonderer Vorteil der erfindungsgemäss verfestigten Glasfaservliese ist deren Schwerentflammbarkeit und Temperaturbeständigkeit.

Die in den folgenden Beispielen angegebenen Teile und Prozente beziehen sich, soweit nicht anders angegeben, auf das Gewicht. Gewichtsteile verhalten sich zu Volumenteilen wie das Kilogramm zum Liter.

*Beispiel 1*

Zu 2000 Teilen einer 40%igen wässerigen Formaldehyd-Lösung gibt man 10,4 Teile Diethylethanolamin, 1225 Teile Melamin, 110 Teile Saccharose, 95 Teile ε-Caprolactam, 275 Teile einer wässerigen 40%igen Lösung des Natriumsalzes der Amidosulfonsäure sowie 102 Teile Methanol. Das Reaktionsgemisch wird dann auf 90° C erhitzt (pH 8,6) und bei dieser Temperatur kondensiert, bis eine Wasserverdünnbarkeit von 1:7,8 bar bei 20° C erreicht ist. Man kühlt auf Raumtemperatur ab und erhält 3788 Teile einer 59,8%igen Harz-Lösung, deren Viskosität (DIN-Becher 4, DIN 53211) 43 DIN-Sekunden, deren Wasserverdünnbarkeitspunkt 8,2% und deren Gehalt an freiem Formaldehyd 0,39% betragen.

*Beispiel 2*

Zu 2000 Teilen einer 40%igen wässerigen Formaldehydlösung gibt man 9,8 Teile Dimethylethanolamin, 1205 Teile Melamin, 110 Teile Acetoguanamin, 90 Teile Saccharose, 262 Teile 40%ige wässerige Lösung des Natriumsalzes der Amidosulfonsäure und 90 Teile Methanol. Das Reaktionsgemisch wird dann auf 90° C aufgeheizt (pH 8,6) und bei dieser Temperatur kondensiert, bis eine Wasserverdünnbarkeit von 1:8,0 erreicht ist. Man lässt auf Raumtemperatur abkühlen und setzt dann 320 Teile Wasser zu. Erhalten werden 4052 Teile 55,1% Harzlösung einer Viskosität von 32 DIN-Sekunden, eines Wasserverdünnbarkeitspunktes von 7,7% und eines Gehalts an freiem Formaldehyd von 0,30%.

*Vergleichsbeispiel A*

Man arbeitet wie in Beispiel 1 angegeben, jedoch ohne Zusatz von Methanol und kondensiert bis zu einer Wasserverdünnbarkeit von 1:7,6. Man erhält dann 3708 Teile einer 59,4%igen Harzlösung einer Viskosität von 47 DIN-Sekunden, eines Wasserverdünnbarkeitspunktes von 9,8% und eines Gehalts an freiem Formaldehyd von 0,39%.

*Vergleichsbeispiel B*

Man arbeitet wie in Beispiel 1 angegeben, fügt jedoch anstelle des ε-Caprolactams zusätzlich 95 Teile Saccharose zu und kondensiert bis zu einer Wasserverdünnbarkeit von 1:7,9. Nach dem

Abkühlen auf Raumtemperatur erhält man 3782 Teile einer 59,9%igen Harzlösung, deren Viskosität 56 DIN-Sekunden, deren Wasserverdünnbarkeitspunkt 8,8% und deren Gehalt an freiem Formaldehyd 0,45% betragen.

*Vergleichsbeispiel C*

Man arbeitet wie in Beispiel 1 angegeben, ersetzt jedoch die Saccharose durch zusätzliche 110 Teile Caprolactam und kondensiert bis zu einer Wasserverdünnbarkeit von 1:7,2. Nach dem Abkühlen auf Raumtemperatur erhält man 3768 Teile einer 59,4%igen Harzlösung, deren Viskosität 39 DIN-Sekunden, deren Wasserverdünnbarkeitspunkt 7,8% und deren Gehalt an freiem Formaldehyd 0,33% betragen.

*Vergleichsbeispiel D*

Man arbeitet wie in Beispiel 1 angegeben, fügt jedoch keine Lösung des Natriumsalzes der Amidosulfonsäure zu und kondensiert bis zu einer Wasserverdünnbarkeit von 1:7,0. Nach dem Abkühlen auf Raumtemperatur erhält man 3522 Teile einer 62,1%igen Harzlösung, deren Viskosität 32 DIN-Sekunden, deren Wasserverdünnbarkeitspunkt 9,7% und deren Gehalt an freiem Formaldehyd 0,52% betragen.

Die Eigenschaften der nach den Beispielen 1 und 2 und den Vergleichsbeispielen A bis D erhaltenen Harzlösungen sind in der folgenden Tabelle 1 zusammengestellt.

*Tabelle 1*

| | Beispiel | | Vergleichsbeispiel | | | |
|---|---|---|---|---|---|---|
| | 1 | 2 | A | B | C | D |
| Lagerstabilität bei 20±1°C in Wochen, betreffend<br>– Eintrübung | >12 | ca. 12 | 8 | 5 | 5 | 1 |
| Verdünnbarkeit bis zu Wasserverdünnbarkeitspunkt 15% | 12 | 12 | 3 | 3 | 3 | 1 |
| 10% | 6 | 6 | 2 | 2 | 2 | 1 |
| – Wasserverdünnbarkeitspunkt 15% > 48 Stunden | 12 | 11 | 2-3 | 2 | 2 | 1 |
| – Viskositätsanstieg auf 1,5 faches des Wertes, wie er 24 Std. nach Herstellung vorliegt | 12 | 12 | ca. 6 | ca. 4 | ca. 5 | nach 1 Woche nicht mehr messbar da Kondensatausfall |

*Beispiel 3*

94,6 Teile wässerige Natronlauge (25%ig), 26,5 Teile Wasser und 59 Teile Amidosulfonsäure werden vorgelegt, 1000 Teile wässerige, 40%ige Formaldehydlösung, 5,2 Teile Diethylethanolamin, 610 Teile Melamin, 20 Teile Dicyandiamid, 40 Teile ε-Caprolactam, 60 Teile Saccharose und 25 Teile Ethanol zugegeben, der Ansatz auf 90° C erhitzt und bei pH 8,7 kondensiert bis zu einer Wasserverdünnbarkeit von 1:7,5. Nach Zugabe von 35 Teilen Wasser und Abkühlen auf Raumtemperatur werden 1984 Teile einer 58,2%igen Harzlösung erhalten, die etwa 8 Wochen lagerstabil ist. Der Wasserverdünnbarkeitspunkt beträgt 8,2% und die Viskosität 28 DIN-Sekunden. Das Harz eignet sich sehr gut als Bindemittel für Faservliese.

*Beispiel 4*

Zu 165 Teilen einer 40%igen wässerigen Lösung von Natriumamidosulfonat werden 1000 Teile wässerige 40%ige Formaldehydlösung, 5 Volumenteile Diethylethanolamin und 610 Teile Melamin gegeben. Anschliessend gibt man 70 Teile Isobutylcarbamat, 40 Teile Sorbit und 45 Teile Methanol zu und kondensiert bei 90° C und pH 8,6 bis zu einer Wasserverdünnbarkeit von 1:7,8. Nach Abkühlen auf Raumtemperatur erhält man 1906 Teile einer 58,9%igen Harzlösung einer Viskosität von 31 DIN-Sekunden, die 7 bis 8 Wochen lagerstabil ist, einen Wasserverdünnbarkeitspunkt von 7,9% aufweist und als Bindemittel für Glasfaservliese gut geeignet ist.

*Beispiel 5*

Zu 165 Teilen einer 40%igen wässerigen Lösung von Natriumamidosulfonat werden 1000 Teile wässerige 40%ige Formaldehydlösung, 5,4 Volumenteile Dimethyl-n-butanol und 610 Teile Melamin gegeben. Anschliessend werden 45 Teilen Ethylenharnstoff und 70 Teile Saccharose zugegeben. Man erhitzt auf 90° C, gibt 40 Teile Methanol zu und kondensiert bei pH 8,8 bis zu einer Wasserverdünnbarkeit von 1:7,4. Nach dem Abkühlen auf Raumtemperatur erhält man 1912 Teile einer 58,9%igen Harzlösung eines Wasserverdünnbarkeitspunkts von 8,8%, einer Viskosität von 29 DIN-Sekunden und einer Lagerstabilität von etwa 9 Wochen, die sich sehr gut als Glasfaservliesbindemittel eignet.

*Beispiel 6*

Man arbeitet wie in Beispiel 5 angegeben, ersetzt jedoch den Ethylenharnstoff durch die gleiche Menge Acetamid. Man erhält 1908 Teile einer 59%igen Harzlösung eines Wasserverdünnbarkeitspunkts von 8,2%, einer Viskosität von 32 DIN-Sekunden und einer Lagerstabilität von 10 Wochen. Bei Ersatz des Methanols durch die gleiche Menge Isopropanol erhält man unter sonst gleichen Bedingungen eine etwa 7 Wochen lagerstabile Harzlösung. Die Harzlösungen sind sehr gut als Bindemittel für Faservliese geeignet.

*Anwendungsbeispiele*

Glasfaservliese eines Flächengewichts von 42 g/m² aus Glasfasern einer Länge von 10 bis 15 mm und eines mittleren Durchmessers von 12 µm werden in einer 20%igen wässerigen Harzflotte derart imprägniert und anschliessend in üblicher Weise zwischen Rollen abgequetscht, dass der Harzanteil, bezogen auf das Glasgewicht, 20% beträgt. Zur Herstellung der Harzflotten werden die Melamin-Formaldehyd-Harz-Lösungen eingesetzt, die nach den Angaben der Beispiele 1 und 2 sowie der Vergleichsbeispiele A, B, C und D erhalten wurden. Weiter wurde für die Herstellung einer Harzflotte eine Lösung E eines Methanolveretherten Melamin-Formaldehyd-Harzes eingesetzt, die nach den Angaben von Beispiel 1 der US-PS 2 715 619 hergestellt war. Die imprägnierten Glasfaservliese wurden im Trockenschrank 2 Minuten bei 200° C getrocknet und danach die Reissfestigkeiten nach DIN 52 141 in trockenem und nassem Zustand (15 Minuten Wasser von Raumtemperatur) sowie nach einer dreitägigen Lagerung bei 100% Luftfeuchte sowie einer Lagerung von 15 min bei 80° C in Wasser bestimmt. Ausserdem wurde die Entflammungstemperatur der verfestigten Vliese an 10 × 10 cm grossen Stücken in einem Muffelofen eines Volumens von 17 × 29 × 9 cm bestimmt, der auf die Entflammungstemperatur erhitzt war, wobei beobachtet wurde, ob eine spontane Entflammung erfolgt.

Die erhaltenen Ergebnisse sind in der folgenden Tabelle 2 zusammengestellt.

*Tabelle 2:* Vergleich der erfindungsgemässen MF-Harze mit den Vergleichsharzen A, B, C, D und E

| Harz | | Beispiel 1 | Beispiel 2 | A | B | C | D | E |
|---|---|---|---|---|---|---|---|---|
| Stabilität der Flotte (Stunden) | | >72 | >72 | ca. 30 | ca. 24 | ca. 24 | <12 | 48-72 |
| Reisswerte gemäss DIN 52 141 (N/5 cm): | | | | | | | | |
| nach Aushärtung | trocken | 238 | 295 | 220 | 225 | 192 | 188 | 230 |
| | nass | 170 | 172 | 144 | 120 | 140 | 140 | 160 |
| nach 3 Tagen Lagerung bei 100% Luftfeuchte | trocken | 110 | 114 | 110 | 90 | 110 | 104 | 104 |
| | nass | 85 | 88 | 82 | 72 | 86 | 90 | 90 |
| nach 15 min in Wasser von 80° C | trocken | 142 | 140 | 130 | 115 | 135 | 145 | 145 |
| | nass | 80 | 81 | 75 | 75 | 72 | 80 | 54 |
| Entflammungstemperatur (° C) | | >750 | >750 | >750 | >750 | >750 | >750 | <650 |

**Patentansprüche**

1. Verfahren zur Herstellung von lagerstabilen, wässerigen Lösungen von Melamin-Formaldehyd-Harzen eines Harzgehaltes von 50 bis 65 Gew.-% durch Polykondensation von Formaldehyd und Melamin in wässerigen Medien, *dadurch gekennzeichnet*, dass man unter folgenden, für sich in Unterkombinationen bekannten Bedingungen bei 70 bis 100° C und einem pH Wert über 8 bei einem molaren Verhältnis von Melamin:Formaldehyd von 1:2,0 bis 3,2 unter Zusatz von

a) 0,025 bis 0,045 Mol je Mol Formaldehyd eines Salzes der Amidosulfonsäure,

b) zusammen 10 bis 30 Gew.-%, bezogen auf Melamin

b1) wenigstens 4 Gew.-%, bezogen auf Melamin, wenigstens einer gesättigten aliphatischen Verbindung mit 1 bis 9 C-Atomen und 1 bis 2 Strukturelementen der allgemeinen Formel

$$-\overset{\overset{X}{\|}}{C}-NH-$$

in der X für O, NH oder S steht,

b2) wenigstens 3 Gew.-%, bezogen auf Melamin, eines nichtreduzierenden Zuckers und

b3) wenigstens 3 Gew.-%, bezogen auf die Menge an Melamin, eines 1 bis 3 C-Atomen enthaltenden Alkanols

bis zu einem Kondensationsgrad polykondensiert, der einem Wasserverdünnbarkeitspunkt der Harzlösung nicht über 10% entspricht.

2. Verfahren zur Herstellung von Lösungen von Melamin-Formaldehyd-Harzen gemäss Anspruch 1, *dadurch gekennzeichnet*, dass die Menge der Komponenten (b1) und (b2) von 10 bis 25 Gew.-%, bezogen auf Melamin beträgt.

3. Verfahren zur Herstellung von Lösung von Melamin-Formaldehyd-Harzen gemäss Anspruch 1, *dadurch gekennzeichnet*, dass als Komponente (b1) ε-Caprolactam und/oder Acetoguanamin eingesetzt wird.

4. Verfahren zur Herstellung von Lösungen von Melamin-Formaldehyd-Harzen gemäss den Ansprüchen 1 bis 3, *dadurch gekennzeichnet*, dass als Komponente (b3) Methanol eingesetzt wird.

5. Lösungen von Melamin-Formaldehyd-Harzen hergestellt nach den Ansprüchen 1 bis 4.

6. Verwendung der nach den Ansprüchen 1 bis 4 hergestellten Lösungen von Melamin-Formaldehyd-Harzen als Überzugs-, Imprägnier- und Bindemittel für Faservliese.

## Claims

1. A process for the preparation of an aqueous solution of a melamine/formaldehyde resin, having a long shelf life and a resin content of from 50 to 65% by weight, by polycondensation of formaldehyde and melamine in an aqueous medium, wherein polycondensation is carried out under the following conditions known per se in subcombinations, at from 70 to 100° C and a pH higher than 8, using a molar ratio of melamine to formaldehyde of from 1:2.0 to 1:3.2, with the addition of
a) from 0.025 to 0.045 mole, per mole of formaldehyde, of a salt of amidosulfonic acid, and
b) a total of from 10 to 30% by weight, based on melamine, of
b1) not less than 4% by weight, based on melamine, of one or more saturated aliphatic compounds containing from 1 to 9 carbon atoms and 1 or 2 structural elements of the formula

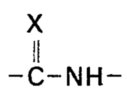

where X is O, NH or S,
b2) not less than 3% by weight, based on melamine, of a nonreducing sugar and
b3) not less than 3% by weight, based on the amount of melamine, of an alkanol of from 1 to 3 carbon atoms,
to a degree of condensation which corresponds to a water dilutability point of the resin solution of not more than 10%.

2. A process for the preparation of a solution of a melamine/formaldehyde resin as claimed in claim 1, wherein the amount of components (b1) and (b2) is from 10 to 25% by weight, based on melamine.

3. A process for the preparation of a solution of a melamine/formaldehyde resin as claimed in claim 1, wherein ϵ-caprolactam and/or acetoguanamine are used as component (b1).

4. A process for the preparation of a solution of a melamine/formaldehyde resin as claimed in claim 1 or 2 or 3, wherein methanol is used as component (3b).

5. A solution of a melamine/formaldehyde resin, prepared as claimed in claim 1 or 2 or 3 or 4.

6. Use of a solution of a melamine/formaldehyde resin, prepared as claimed in claim 1 or 2 or 3 or 4, as a coating material, an impregnating material or a binder for nonwovens.

## Revendications

1. Procédé de préparation de solutions aqueuses, stables à la conservation, de résines mélamine-formaldéhyde d'une teneur en résine de 50 à 65% en poids, par polycondensation de formaldéhyde et de mélamine en milieux aqueux, caractérisé en ce qu'on effectue une polycondensation jusqu'à un degré de condensation qui correspond à un degré de diluabilité dans l'eau de la solution de résine ne dépassant pas 10%, dans les conditions suivantes, connues en elles-mêmes en tant que sous-combinaisons, d'une température de 70° à 100° C et d'un pH supérieur à 8 avec un rapport molaire mélamine/formaldéhyde de 1/2,0 à 3,2, avec addition de
a) 0,025 à 0,045 mole par mole de formaldéhyde d'un sel d'acide sulfamique,
b) et au total 10 à 30% en poids par rapport à la mélamine,
b1) d'au moins 4% en poids, par rapport à la mélamine, d'au moins un composé aliphatique saturé ayant de 1 à 9 atomes de carbone et 1 ou 2 éléments structuraux de formule

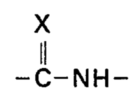

dans laquelle X est mis pour O, NH ou S,
b2) d'au moins 3% en poids, par rapport à la mélamine, d'un sucre non réducteur, et
b3) d'au moins 3% en poids, par rapport à la mélamine, d'un alcanol contenant de 1 à 3 atomes de carbone.

2. Procédé de préparation de solutions de résines mélamine-formaldéhyde selon la revendication 1, caractérisé en ce que la quantité des composants (b1) et (b2) représente de 10 à 25% en poids par rapport à la mélamine.

3. Procédé de préparation de solutions de résines mélamine-formaldéhyde selon la revendication 1, caractérisé en ce qu'on utilise comme composant (b1) de l'ϵ-caprolactame et/ou de l'acétoguanamine.

4. Procédé de préparation de solutions de résines mélamine-formaldéhyde selon l'une des revendications 1 à 3, caractérisé en ce qu'on utilise du méthanol comme composant (b3).

5. Solutions de résines mélamine-formaldéhyde préparées selon l'une des revendications 1 à 4.

6. Utilisation des solutions de résines mélamine-formaldéhyde préparées selon l'une des revendications 1 à 4, comme liant, revêtement ou produit d'imprégnation pour non-tissés.